Europäisches Patentamt

European Patent Office

Office européen des brevets

(19)

(11) Numéro de publication: **0 011 011**
**B1**

(12) **FASCICULE DE BREVET EUROPEEN**

(45) Date de publication du fascicule de brevet: **09.12.81**

(51) Int. Cl.³: **G 02 B 7/26**

(21) Numéro de dépôt: **79400757.5**

(22) Date de dépôt: **17.10.79**

(54) **Embout de connecteur pour monofibre optique et connecteur comportant un tel embout.**

(30) Priorité: **27.10.78 FR 7830606**

(43) Date de publication de la demande:
**14.05.80 Bulletin 80/10**

(45) Mention de la délivrance du brevet:
**09.12.81 Bulletin 81/49**

(84) Etats Contractants Désignés:
**BE DE GB IT NL SE**

(56) Documents cités:
**DE - A - 2 559 448
DE - A - 2 602 661
FR - A - 2 331 042
GB - A - 1 521 780**

(73) Titulaire: **SOCAPEX**
**10 bis, quai Léon Blum**
**F-92150 Suresnes (FR)**

(72) Inventeur: **Malsot, Christian**
**"THOMSON-CSF" - SCPI 173, bld Haussmann**
**F-75360 Paris Cedex 08 (FR)**
Inventeur: **Desmurs, Roland**
**"THOMSON-CSF" - SCPI 173, bld Haussmann**
**F-75360 Paris Cedex 08 (FR)**
Inventeur: **Bouygues, Jean**
**"THOMSON-CSF" - SCPI 173, bld Haussmann**
**F-75360 Paris Cedex 08 (FR)**

(74) Mandataire: **Favre, Maurice et al,**
**"THOMSON-CSF" - SCPI 173, bld Haussmann**
**F-75360 Paris Cedex 08 (FR)**

Embout de connecteur pour monofibre optique et connecteur comportant un tel embout

La présente invention se rapporte au domaine des connecteurs pour lignes optiques du type monofibre. Elle concerne plus particulièrement un embout de connecteur pour fibre optique munie d'une gaine plastique revêtue notamment d'un manchon déformable possédant un canal intérieur ayant un axe de symétrie longitudinal.

Les connecteurs de ce type comportent en général deux embouts, dont chacun contient une des extrémités d'une des fibres à raccorder. Le raccordement optique entre les faces de contact des deux monofibres exige, par suite des très petites dimensions de leurs sections droites, typiquement des surfaces limitées par des cercles de l'ordre de 100 microns de diamètre, une grande précision dans le positionnement transversal des extrémités des deux monofibres dans leur embout respectif.

Cette condition est habituellement remplie en adoptant, comme surface de référence de positionnement transversale, celle de la fibre elle-même, satisfaisante par son matériau constitutif, un verre ou une silice de grande dureté, et par sa forme géométrique précise, celle d'un cylindre à base circulaire. Cependant, certains types de fibres optiques ont été récemment développés, qui se composent d'un coeur de silice ou de verre, et d'une gaine coaxiale en matériau plastique; cette gaine plastique n'assume pas particulièrement une fonction de protection mécanique, et participe au guidage optique de la lumière injectée dans le coeur. Ces fibres ont plusieurs avantages, qui sont principalement des pertes au kilomètre peu élevées, inférieures à 10 dB, une résistance à la traction élevée, supérieure à 1 kg, l'aptitude à supporter des rayons de courbure très faibles, pouvant descendre jusqu'à 10 mm, des diamètres suffisamment grands pour que la manipulation en soit simple et aisée (les diamètres du coeur lui-même sont compris entre 150 microns et 1 millimètre).

Cependant, le raccordement de ces fibres entre elles pose un problème particulier. Il est, en effet, nécessaire de placer rigoureusement en vis-à-vis les faces terminales des deux fibres à raccorder, et plus précisément les coeurs eux-mêmes, condition connue, mais qui implique de disposer d'une surface latérale de référence à la fois précise et indéformable. Or, la gaine plastique n'a pas une précision suffisante, par son mode de fabrication, pour être considérée comme ayant un diamètre rigoureux, et de plus elle ne constitue pas une surface indéformable puisqu'elle est réalisée en matériau malléable; enfin, le centrage du coeur dans cette gaine n'est pas en général réalisé, ce qui conduit à un excentrement pouvant atteindre plusieurs dizaines de microns.

Aussi, la seule surface de référence qui soit utilisable est la surface cylindrique latérale du coeur, qui présente une grande dureté, une excellente régularité dimensionnelle, et dont la section est un cercle pratiquement parfait. Il pourrait être envisageable, pour se servir de cette surface de référence, d'enlever la gaine plastique afin de se centrer directement autour du coeur de la fibre. Cependant, le phénomène optique de réflexion à l'interface entre le coeur et la gaine ne peut alors se produire, et des pertes apparaissent, qui compromettent la bonne continuité de la transmission optique.

Il est connu, du brevet français 2 331 042, de réaliser des embouts de connecteurs pour fibres optiques munis de gaines plastiques en revêtant ladite fibre et sa gaine avec un manchon déformable de dimensions intérieures sensiblement égales aux dimensions extérieures de la gaine. Le sertissage de ce manchon est réalisé avec une pince comportant plusieurs mors, permettant d'appliquer des forces radiales sur ce manchon et le déformer en provoquant le fluage de la gaine plastique qui l'entoure. Un tel procédé présente cependant de nombreux inconvénients. La pince de sertissage comporte des moyens de blocage qui limitent la course des mors de la pince afin d'éviter de casser la fibre. Il est bien connu que ces moyens sont rarement utilisés correctement, en particulier sur les chantiers où ont lieu les raccordements de fibres optiques. En effet, chaque diamètre différent de fibre et/ou de gaine optique nécessite un réglage différent de la pince. Par conséquent, les risques de rupture de la fibre pendant le sertissage sont malgré tout élevés avec ce procédé. Par ailleurs, les risques de rupture de la fibre existent également après sertissage puisque le manchon est, par sa nature, déformable.

L'embout de connecteur selon l'invention permet d'éviter ces inconvénients. Dans ce but, il est caractérisé en ce qu'il comporte en outre quatre mors, disposés dans ce manchon, lesdits mors délimitant un passage axial, après l'application de forces radiales de même grandeur en quatre régions du manchon, orientées sensiblement à 90° les unes par rapport aux autres et provoquant par déformation du canal intérieur, le fluage de la gaine plastique et le contact tangentiel des quatre mors.

Selon un mode préférentiel de réalisation, ces quatre mors sont constitués soit par des cylindres d'axe parallèle à l'axe de symétrie longitudinal du manchon, soit par des billes sphériques.

Un tel embout de connecteur présente l'avantage d'avoir une structure auto-limitative, c'est-à-dire que le contact tangentiel des mors, après sertissage du manchon, limite le diamètre du passage axial, évitant tout contact direct du manchon et/ou des mors avec la fibre. De plus, on constate également une régularisation spontanée de l'épaisseur de la gaine optique dans les régions où les forces radiales de même grandeur sont appliquées, par fluage du matériau dont elle est constituée, conduisant à un recentrage spontané du coeur de la fibre par rapport au cylindre de référence extérieur. Par ailleurs, la présence des mors à l'intérieur du manchon de centrage apporte les avantages d'une précision élevée dans l'obtention du phénomène de centrage par fluage, par la possibilité qu'elle offre du choix de mors internes géométriquement très précis, tout en autorisant un choix peu critique, dans les dispositifs de serrage extérieurs, qui peuvent être réalisés et utilisés avec une précision plus réduite.

Le nombre optimal de forces radiales nécessaires à l'obtention d'un fluage de centrage satisfaisant dépend de paramètres liés à la nature du matériau dont est constitué la gaine plastique et à son épaisseur. Les essais effectués par la Demanderesse ont montré que, dans les cas de fibres dont les dimensions ont été indiquées plus haut, un nombre égal à quatre était en général optimal; en particulier, dans le cas où les quatre mors internes sont réalisés suivant des tiges cylindriques, et sont donc, en section droite, figurés par quatre cercles sensiblement tangents entre eux et délimitant un vide central pour la fibre optique, le choix de quatre mors s'avère très avantageux en conduisant à des diamètres d'échelle commode, à savoir très supérieurs au cas de six mors, et très inférieurs au cas de trois mors, correspondant à des cylindres de référence respectivement trop petits et trop gros.

L'invention sera mieux comprise à l'aide de la description ci-après, en s'appuyant sur les figures jointes, où:

— la figure 1 représente suivant trois étapes (a) (b) (c) le procédé de fixation du manchon sur la fibre, tel que découlant de la technique antérieure,

— la figure 2 représente une première variante de réalisation de l'embout selon l'invention,

— la figure 3 représente une deuxième variante de réalisation de l'embout selon l'invention.

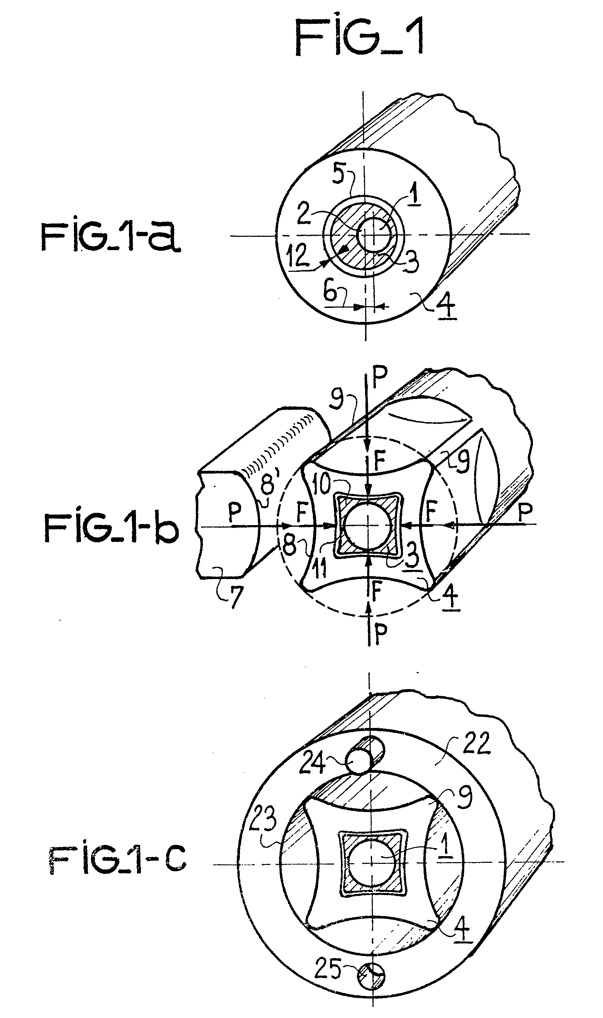

La figure 1 représente, suivant des vues en couple les trois étapes (a) (b) (c), du déroulement du procédé de réalisation d'un embout de connecteur pour fibre optique à partir d'un manchon déformable.

La première étape (a) comporte l'introduction de la fibre optique 1, constituée d'un coeur 2 et d'une gaine plastique 3, dans un manchon 4 de forme cylindrique percé d'un canal axial 5. Ce manchon est réalisé en un matériau apte à subir une déformation permanente sous l'action d'une force qui lui est appliquée, tel que le cuivre, du plomb, on encore certaines matières plastiques connues en soi. Le choix du diamètre intérieur du canal laisse subsister un jeu déterminé 12, enfin l'épaisseur de ses parois est limitée à une valeur compatible avec la possibilité de déformation sous l'action d'une force déterminée.

La fibre optique 1, dans le cas le plus fréquent, présente une irrégularité dans l'épaisseur de sa gaine optique 3, et l'axe de son coeur cylindrique 2 est donc décentré par rapport à l'axe du canal intérieur cylindrique 5 du manchon, d'une longueur 6.

La figure 1, dans sa partie (b), représente la deuxième étape du procédé.

A cette étape, le manchon 4 est soumis à l'action de quatre forces F, orientées radialement, exercées sur lui par des mors tels que 7, dont un seul a été représenté pour simplification, portés par un pince à quatre mors de type connu, telle que celles qui sont utilisées pour la fixation de "cosses" de contact sur des fils électriques; ces mors ont une surface latérale de serrage 8 en forme de cylindre, dont les génératrices sont orientées, à cette étape, parallèlement à celles du manchon 4. Sous cette action, la surface extérieure du manchon s'écrase suivant quatre dépressions orientées à 90°, telles que 8, entre lesquelles subsistent des régions non modifiées telles que 9, représentant le diamètre primitif du manchon.

Si les quatre forces F sont sensiblement égales et opposées, elles s'équilibrent deux à deux et les quatre dépressions créées sont sensiblement de même profondeur.

A la création de ces dépressions correspond celle de quatre régions convexes dans le canal intérieur du manchon, produisant l'application sur la gaine plastique de forces radiales.

C'est à cette étape que, sous cette influence, se produit le phénomène de fluage de la gaine plastique optique 3, qui migre dans les vides, tels que 10, laissés par l'écrasement du manchon dans son canal central, grâce au jeu, en procurant un centrage spontané de la fibre dans sa gaine, chacune des quatre régions 11 située en vis-à-vis d'une dépression 8 étant à la fin de l'étape, d'épaisseur sensiblement identique à + 2,5 microns près.

Toutes les dimensions du manchon, vues en section droite, présentent alors une symétrie quaternaire.

La figure 1 (c) représente la troisième et dernière étape de la réalisation de l'embout, consistant en l'introduction du manchon 4 dans un cylindre creux 22 dont le diamètre de la paroi cylindrique interne 23 est sensiblement de l'ordre de grandeur du diamètre des régions 9 du manchon centreur 4.

Le centrage de la fibre 1 est ainsi rigoureusement réalisé par rapport à l'embout 22, qui peut être mis en vis-à-vis, avec une grande précision, avec un autre embout, par utilisation d'un dispositif de centrage tel qu'on tenon 24 et un logement 25, assurant une transmission optique à pertes réduites.

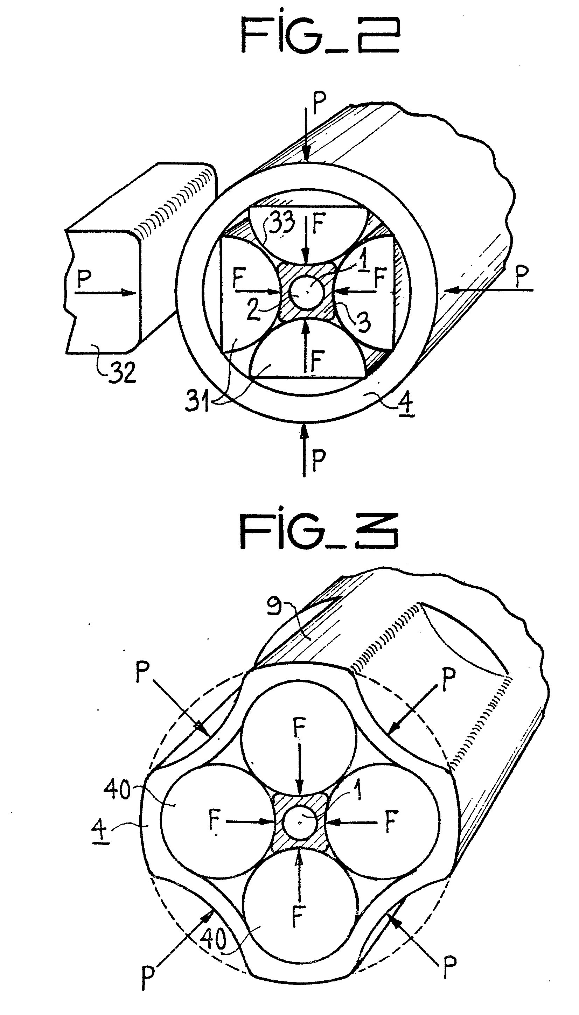

La figure 2 représente une première variante de réalisation d'un embout selon l'invention, particulièrement avantageuse dans le cas des fibres de plus petit diamètre. Suivant cette variante, le dispositif assurant la création des forces de fluage de la gaine plastique optique est divisé en deux moyens séparés, à savoir d'une part les quatre mors tels que 31, disposés à intérieur du manchon de centrage 4, et d'autre part le moyen d'application des forces nécessaires sur les mors, tels que le poussoir 32, solidaire de leviers non représentés. L'avantage de cette réalisation selon l'invention est que la gaine plastique est en contact non plus avec une paroi d'un manchon dont la courbure, après déformation peur être irrégulière, mais directement avec des mors 31, dont la surface 33 peut être réalisée avec une grande précision, et constitués d'un matériau de grande dureté, tel que l'acier.

La surface extérieure du manchon 4, après action des poussoirs 32, présente des régions non modifiées qui peuvent, comme dans l'étape (c) de la figure 1, servir de surfaces de référence pour la fixation finale dans un embout, par tout moyen connu tel que soudure, collage, ou blocage par vis.

Chaque mors intérieur présente une face à rayon de courbure déterminé — pour assurer le phénomène de fluage, et une face plane — pour recevoir la force appliquée par le poussoir correspondant. Une forme avantageuse d'un mors est celle qui, vue en section représente un demi-cercle.

L figure 3 représente une autre variante de réalisation d'un embout pour fibre optique selon l'invention.

Suivant cette variante, particulièrement intéressante pour des fibres optiques de très petit diamètre, les quatre mors sont réalisés sous la forme de cylindres complets 40, de section circulaire, qu'on sait réaliser avec une très grande précision, et une grande dureté superficielle, celle de l'acier par exemple.

La succession des étapes est identique à celle qui correspond à la mise en oeuvre illustrée par la figure 2. Cependant, l'application des poussoirs extérieurs 32 sur la manchon 4 peut se faire avantageusement dans des directions P perpendiculaires entre elles, mais orientées à 45° par rapport à celle des forces de fluage désirées F, réalisant un effet d'équilibrage particulièrement efficace entre ces quatre forces, par la composition vectorielle ainsi réalisée.

Cet effet est d'autant plus utile que, ainsi qu'il est connu en géométrie, la figure d'équilibre représentée par quatre cercles tangents entre eux admet une infinité der formes en losange, à l'inverse du cas de trois et six cercles tangents qui constituent une figure stable, cas qui sont entièrement en dehors du domaine de la présente invention.

Il est par ailleurs à remarquer, comme les expériences faites par la Demanderesse l'ont montré, et ainsi qu'il a été déjà indiqué plus haut, le résultat de la mise en oeuvre du procédé de l'invention, à savoir le centrage spontané de la fibre optique dans sa gaine plastique par fluage, dépend largement, pour des forces appliquées données, de l'épaisseur de cette dernière et du matériau dont elle est constituée.

Il est à remarquer que, bien que le procédé de l'invention ait été décrit dans le mode de réalisation de la figure 3, avec utilisation de mors cylindriques à base circulaire, tout mors de forme telle qu'elle soit apte à procurer la fonction équivalente de fluage doit être compris dans le domaine de l'invention. En particulier, la substitution de quatre billes sphériques aux quatre cylindres décrits fait partie de la présente invention.

Il est enfin à remarquer que le phénomène spontané du centrage par fluage plastique peut être exploité, avec mise en oeuvre de matériaux plastiques convenables, dans le centrage d'une fibre optique par fluage de son enveloppe extérieure de protection contre l'environnement: il est alors nécessaire que la fibre soit du type à gaine de silice, autorisant l'adoption de la surface extérieure de la gaine comme surface de référence de centrage.

Dans un cas pratique, donné à titre d'exemple, une fibre optique de 420 microns de diamètre, comportant un coeur de silice de 200 microns et une gaine plastique optique de 110 microns d'épaisseur, a pu être centrée, par centrage spontané, à + 2,5 microns dans un manchon à quatre mors à section circulaire de 0,5 mm de diamètre.

**Revendications**

1. Embout de connecteur pour fibre optique munie d'une gaine plastique revêtue notamment d'un manchon déformable possédant un canal intérieur ayant un axe de symétrie longitudinal, caractérisé en ce qu'il comporte en outre quatre mors, disposé dans ce manchon, lesdits mors délimitant un passage axial après l'application de forces radiales de même grandeur en quatre régions du manchon, orientées sensiblement à 90° les unes par rapport aux autres et provoquant par déformation du canal intérieur le fluage de la gaine plastique et le contact tangentiel des quatre mors.

2. Embout de connecteur selon la revendication 1, caractérisé en ce que les quatre mors sont des cylindres d'axe parallèle à l'axe de symétrie longitudinal du manchon.

3. Embout de connecteur selon la revendication 1, caractérisé en ce que les quatre mors sont des billes sphériques.

4. Embout de connecteur selon l'une des revendications 1 à 3, caractérisé en ce que l'application des forces radiales a été réalisée dans des directions situées à 45° par rapport aux forces de fluage appliquées sur la gaine de la fibre.

5. Embout de connecteur selon l'une des revendications 1 à 4, caractérisé en ce que la gaine plastique de la fibre est une gaine optique.

**0011011**

6. Connecteur de fibres optiques, caractérisé en ce qu'il comporte au moins un embout selon l'une des revendications précédentes.

## Claims

1. Connector end-fitting for an optical fibre provided with a plastic sheath lined, more particularly, with a deformable envelope having an inner channel with a longitudinal symmetry axis, characterized in that it further comprises four jaws placed within said envelope, said jaws delimiting an axial passage after application of equal radial forces in four zones of said envelope, which forces are offset by substantially 90°C with reference to each other and cause, by deforming the inner channel, the flowing of the plastic sheath and tangential engagement of said four jaws.

2. Connector end-fitting according to claim 1, characterized in that the four jaws and cylinders having axes parallel to the longitudinal symmetry axis of said envelope.

3. Connector end-fitting according to claim 1, characterized in that said four jaws are spherical balls.

4. Connector end-fitting according to any one of claims 1 to 3, characterized in that said radial forces have been applied in directions inclined under 45° with reference to the flowing forces applied to the sheath of the fibre.

5. Connector end-fitting according to any one of claims 1 to 4, characterized in that the plastic sheath of the fibre is an optical sheath.

6. Optical fibre connector, characterized in that it comprises at least one end-fitting according to any one of the preceding claims.

## Patentansprüche

1. Verbindungsendstück für einen Lichtleiter mit einer Plastikhülle und insbesondere einer dieselbe umgebenden, verformbaren Umkleidung, die einen Innenkanal mit Längssymmetrieachse aufweist, dadurch gekennzeichnet, dass es ferner vier innerhalb der Umkleidung angeordnete Backen aufweist, die nach Anwendung gliechwertiger, um etwa 90° gegeneinander versetzter radialer Kräfte in Zonen der Umkleidung einen axialen Durchlass bilden, wobei die radialen Kräfte durch Verformung des Innenkanals ein Kriechen der Plastikhülle und einen tangentialen Kontakt der vier Backen bewirken.

2. Verbindungsendstück nach Anspruch 1, dadurch gekennzeichnet, dass die vier Backen durch Zylinder mit zur Symmetrielängsachse der Umkleidung paralleler Achse gebildet sind.

3. Verbindungsendstück nach Anspruch 1, dadurch gekennzeichnet, dass die vier Backen durch sphärische Körper gebildet sind.

4. Verbindungsendstück nach einem der Ansprüche 1 bis 3, dadurch gekennzeichnet, dass die radialen Kräfte in Bezug auf die Plastikhülle des Lichtleiters ausgeübten Kriechkräfte unter 45° geneigten Richtungen ausgeübt wurden.

5. Verbindungsendstück nach einem der Ansprüche 1 bis 4, dadurch gekennzeichnet, dass die Plastikhülle des Lichtleiters eine Optikhülle ist.

6. Verbindungsendstück für Lichtleiter, dadurch gekennzeichnet, dass er wenigstens ein Verbindungsendstück nach einem der vorstehenden Ansprüche aufweist.

# FIG_1

## FIG_1-a

## FIG_1-b

## FIG_1-c

# FIG_2

# FIG_3